# EUROPEAN PATENT APPLICATION

(11) **EP 1 264 525 A1**
(43) Date of publication of application: **11.12.2002**
(21) Application number: 02009508.9
(22) Date of filing: 25.04.2002
(51) Int. Cl.: A01B 71/06

(54) **Agricultural machine**

(30) Priority: 27.04.2001 IT BO20010037 U
(71) Applicant: Bartolini Bruno, IT-06020 Gubbio Frazione Mocaiana (IT)
(72) Inventor: Bartolini Bruno, IT-06020 Gubbio Frazione Mocaiana (IT)
(74) Representative: Jorio, Paolo

(57) **Abstract**

In an agricultural machine, a drive unit (2) has at least one power take-off (4) having an output shaft (5), which is connected in angularly fixed manner to an input shaft (9) of an operating unit (3) by means of a splined coupling (16); the input shaft (9) and the output shaft (5) having one a number of cavities (23), and the other a number of teeth (17) and a guide member (24) which projects axially from the teeth (17) to assist insertion of the teeth (17) inside the relative cavities (23).

## Description

The present invention relates to an agricultural machine.

More specifically, the present invention relates to an agricultural machine of the type comprising a drive unit having at least one power take-off with an output shaft rotating about a longitudinal axis; an operating unit having an input shaft with a hub; and a splined coupling for locking the output shaft angularly inside the hub.

The splined coupling comprises a number of teeth projecting outwards from the outer surface of the output shaft; and a number of cavities formed on the inner surface of the hub, and shaped and arranged so as each to receive a respective tooth when the output shaft is inserted axially inside the hub.

Known agricultural machines of the above type have the drawback of requiring, on the part of the user, a good deal of complicated, precise maneuvering to insert the output shaft inside the hub. That is, the hub must first be positioned coaxial with the output shaft; the output shaft and hub must then be rotated with respect to each other to position the teeth facing the respective cavities; and, finally, the input shaft must be moved to insert the output shaft axially inside the hub.

The above procedure is made even more awkward by the fairly substantial weight of the input shaft, and by the presence of protective casings, which greatly impair access to and maneuverability of the input and output shafts.

It is an object of the present invention to provide an agricultural machine designed to eliminate the aforementioned drawbacks.

According to the present invention, there is provided an agricultural machine comprising a drive unit having at least one power take-off having an output shaft; an operating unit having an input shaft; and a splined coupling for angularly locking said input shaft and said output shaft; the input shaft and the output shaft having one a hub and the other a shank; and said splined coupling comprising a first number of teeth arranged about said shank, and a number of cavities arranged about said hub and for each receiving a respective said tooth; characterized in that said shank has a guide member projecting axially with respect to said teeth to facilitate insertion of the shank inside said hub.

A non-limiting embodiment of the present invention will be described by way of example with reference to the accompanying drawings, in which:
Figure 1 shows a schematic view in perspective of a preferred embodiment of the agricultural machine according to the present invention;
Figure 2 shows a side view of a first detail in Figure 1;
Figure 3 shows a longitudinal section of a second detail in Figure 1;
Figure 4 shows the Figure 2 detail partly inserted inside the Figure 3 detail.

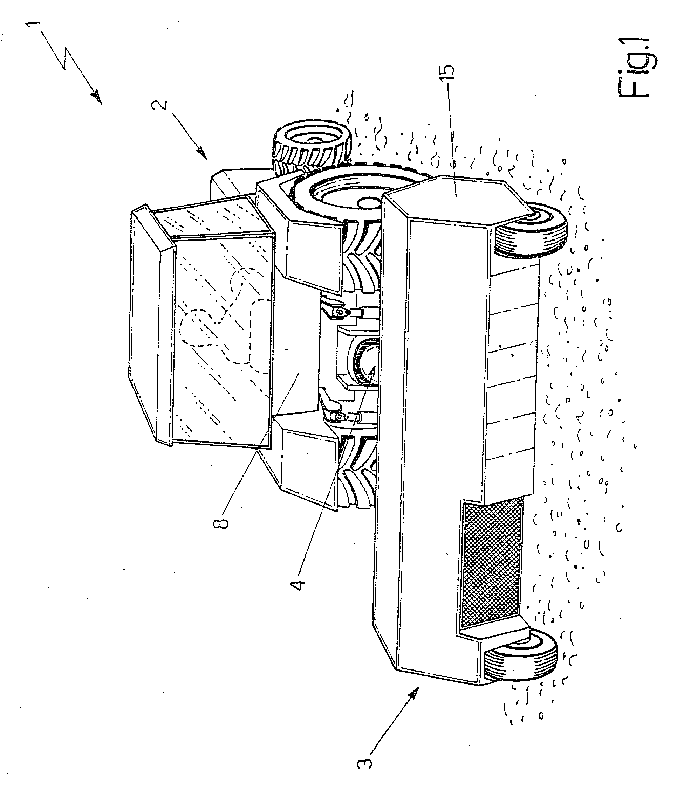

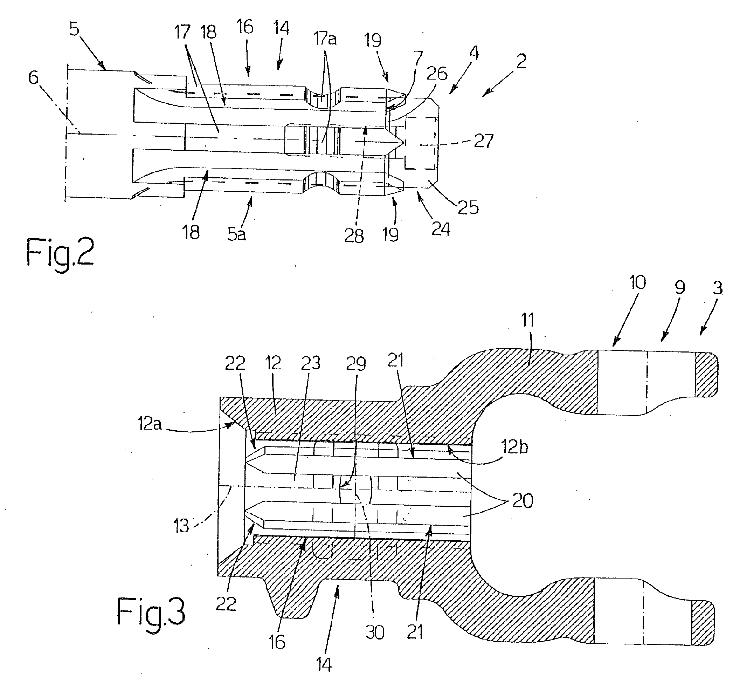

With reference to Figures 1 and 2, number 1 indicates as a whole an agricultural machine comprising a drive unit 2, and an operating unit 3 associated with unit 2. Unit 2 comprises a power take-off 4 having a powered output shaft 5, which has a longitudinal axis 6, comprises an end shank 5a defined axially by an end surface 7 substantially perpendicular to axis 6, and is mounted to rotate about axis 6 and with respect to a frame 8 of unit 2 by virtue of a known actuating device not shown.

With reference to Figure 3, unit 3 comprises an input shaft 9 defined at least partly by a universal joint 10, a fork 11 of which has a hub 12 having a longitudinal axis 13 and defined internally by an inner surface comprising a substantially truncated-cone-shaped portion 12a, and a substantially cylindrical portion 12b. Hub 12 is connected to shaft 5 in axially and angularly fixed manner by a coupling device 14, and is rotated by shaft 5 about axis 13 and with respect to a frame 15 (Figure 1) of unit 3.

Device 14 comprises a splined coupling 16 in turn comprising a number of teeth 17, which project outwards from an outer surface of shank 5a, are equally spaced about axis 6, and have respective seats 17a aligned with one another along a circle lying in a plane substantially perpendicular to axis 6. Each tooth 17 is defined laterally by two sides 18 extending substantially parallel to each other along part of the overall length of tooth 17, and has an end portion 19 where sides 18 project axially from surface 7 and converge with each other.

Coupling 16 also comprises a number of teeth 20, which are equal in number to teeth 17, are formed on portion 12b of the inner surface of hub 12, and are equally spaced about axis 13. Each tooth 20 is defined laterally by two sides 21 extending substantially parallel to each other along part of the overall length of tooth 20, and has an end portion 22 where sides 21 converge with each other.

Coupling 16 also comprises a number of cavities 23 alternating with teeth 20, and arranged and shaped so as each to receive a respective tooth 17 when shank 5a is inserted axially inside hub 12.

Engagement of teeth 17 inside cavities 23 is assisted by a guide member 24 comprising a substantially cylindrical body 25, which is locked against surface 7, in a position coaxial with axis 6 and with the interposition of a flat washer 26, by means of a lock screw 27 extending through body 25 and for engaging a threaded hole 28, which is formed through shank 5a, coaxially with axis 6, and opens outwards at surface 7. More specifically, it should be pointed out that body 25 is located between portions 19 of teeth 17, and is of such a length, measured parallel to axis 6, that member 24 projects axially with respect to portions 19.

Device 14 also comprises a lock pin (not shown), which, when shank 5a is inserted axially inside hub 12, engages a hole 29 extending through hub 12 and having an axis 30 substantially crosswise to axis 13, and engages seat 17a of the tooth 17 facing hole 29.

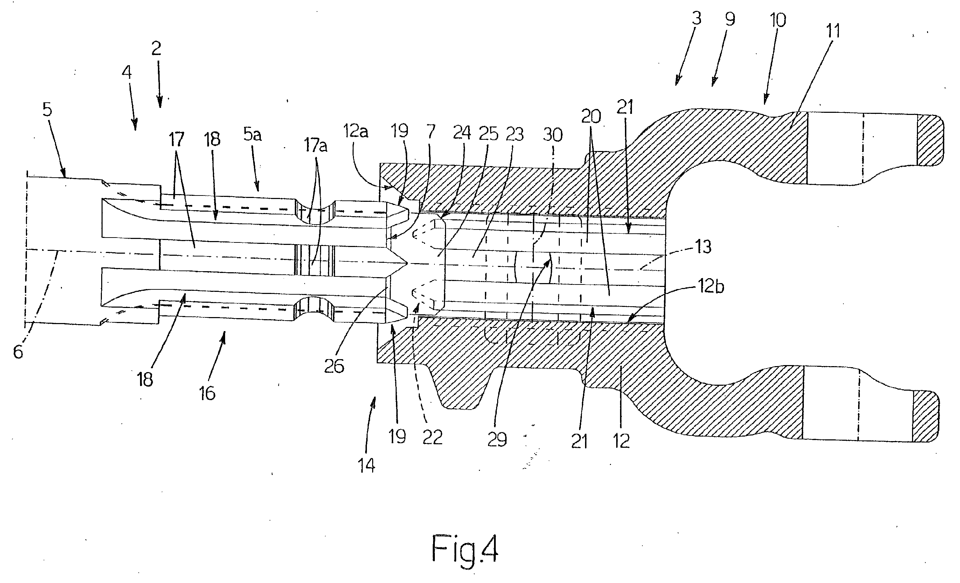

In actual use, the user first positions shaft 5 and hub 12 coaxial with each other, and then moves shaft 5 and hub 12 axially with respect to each other so that guide member 24 engages hub 12 (Figure 4). At this point, hub 12 is supported by shaft 5, and the user simply rotates shaft 5 and hub 12 with respect to each other to position teeth 17 facing corresponding cavities 23, moves hub 12 axially to insert shank 5a inside hub 12, and then inserts said lock pin (not shown) inside hole 29.

It should be pointed out that insertion of guide member 24 inside hub 12 is assisted by truncated-cone-shaped portion 12a, and that insertion of teeth 17 inside respective cavities 23 is simplified greatly by the tapered shape of portions 19 and 22 of teeth 17 and 20 respectively.

## Claims

1. An agricultural machine comprising a drive unit (2) having at least one power take-off (4) having an output shaft (5); an operating unit (3) having an input shaft (9); and a splined coupling (16) for angularly locking said input shaft (9) and said output shaft (5); the input shaft (9) and the output shaft (5) having one a hub (12) and the other a shank (5a); and said splined coupling (16) comprising a first number of teeth (17) arranged about said shank (5a), and a number of cavities (23) arranged about said hub (12) and for each receiving a respective said tooth (17); **characterized in that** said shank (5a) has a guide member (24) projecting axially with respect to said teeth (17) to facilitate insertion of the shank (5a) inside said hub (12).

2. A machine as claimed in Claim 1, wherein said guide member (24) is a substantially cylindrical member having a diameter approximately equal to but no greater than an inside diameter of said hub (12).

3. A machine as claimed in Claim 1 or 2, wherein said splined coupling (16) also comprises a second number of teeth (20) arranged about said hub (12); at least part of each said tooth (17, 20) being defined laterally by two substantially parallel sides (18, 21).

4. A machine as claimed in Claim 3, wherein each said tooth (17, 20) comprises an end portion (19, 22), at which the relative said sides (18, 21) converge with each other.

5. A machine as claimed in Claim 4, wherein said shank (5a) has a longitudinal axis (6), and is defined axially by an end surface (7) substantially perpendicular to said axis (6); said end portions (19) of the teeth (17) in said first number of teeth (17) projecting axially from said end surface (7), and being arranged about said guide member (24).

6. A machine as claimed in any one of Claims 3 to 5, wherein said hub (12) is defined internally by an inner surface comprising a substantially truncated-cone-shaped first portion (12a), and a substantially cylindrical second portion (12b); said second number of teeth (20) being formed at said second portion (12b); and said first portion (12a) assisting insertion of said guide member (24) inside the hub (12).

7. A machine as claimed in any one of the foregoing Claims, and also comprising locking means for axially locking said shank (5a) inside said hub (12) when the shank (5a) is inserted axially inside the hub (12).
